(19) Europäisches Patentamt
European Patent Office
Office européen des brevets

(11) **EP 3 806 323 A1**

(12) **EUROPEAN PATENT APPLICATION**

(43) Date of publication:
14.04.2021 Bulletin 2021/15

(51) Int Cl.:
*H02P 29/66* *(2016.01)*

(21) Application number: **19202515.3**

(22) Date of filing: **10.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Vitesco Technologies GmbH**
**30165 Hannover (DE)**

(72) Inventors:
• **Uhrin, Rastislav**
  **81737 München (DE)**
• **Baumann, Thomas**
  **81737 München (DE)**

(54) **METHOD AND SYSTEM FOR ESTIMATING AN INITIAL TEMPERATURE OF A ROTOR OF AN ELECTRIC MACHINE**

(57)    The invention relates to a method for estimating an initial rotor temperature of a rotor (12) of an electric machine (14), in particular of a permanent magnet synchronous machine (16), before an operating phase of this electric machine (14), wherein the electric machine (14) is supplied with current via current paths (20, 22, 24) by means of a power inverter (18) and wherein via a module (26) for carrying out a so-called d/q-transformation
- a module (28) for outputting switching signals for the electrical machine (14) can be controlled by means of two voltages VD, VQ, each related to one of two rotor referred coordinates d and q applied to one of two corresponding voltage inputs (30, 32), and
- the current flowing along the current paths (20, 22, 24) can be read out at two corresponding current outputs (34, 36) as currents ID, IQ, each referred to one of the two rotor referred coordinates d and q.

Before or at the beginning of the operating phase a voltage pulse signal (40) is given to at least one of the voltage inputs (30) and the initial rotor temperature is determined from a current response (42) to this defined voltage pulse signal (40) at one or more of the current outputs (34).

Fig. 1

**Description**

The invention relates to a method and a corresponding system for estimating an initial rotor temperature of a rotor of an electric machine, in particular of a permanent magnet synchronous machine, before an operating phase of this electric machine, wherein the electric machine is supplied with current via current paths by means of a power inverter and wherein via a module for carrying out a so-called d/q-transformation

- a module for outputting switching signals for the electrical machine can be controlled by means of two voltages, each related to one of two rotor referred coordinates d and q applied to one of two corresponding voltage inputs, and
- the current flowing along the current paths can be read out at two corresponding current outputs as currents, each referred to one of the two rotor referred coordinates d and q.

In electric vehicle (EV) applications nowadays interior permanent magnet synchronous motors (IPMSM) are used for their efficiency, maximal power density and suitable speed range. In such applications, the system requirements specify torque production commonly with high "safety integrity level" - ASIL and certain accuracy for the electric drive train. To compute the motor torque with required accuracy in electronic control unit, the influence of temperature must be taken in account. It is because permanent magnets, such as NdFeB which are used to build rotor, have their parameters, remanence and coercivity depended on temperature. Therefore, magnet flux level depends on temperature and it will influence accuracy of torque calculation.

In control unit software, a model that estimates rotor magnet temperature is usually implemented. The model output is used for corrections of computed torque due to the temperature effect on magnets. Estimated temperature is also used in another function which prevents rotor to overheat, otherwise magnets can be irreversibly demagnetized when certain critical temperature is reached.

Such rotor temperature models or rotor temperature estimators may be based on different principles, i.e. thermal node model - here individual motor elements/parts are represented by nodes which are interconnected by thermal resistances and capacitances and are forming a network (Foster/Cauer configuration). The inputs are electrical losses developed in motor parts and node output is the temperature. The node model can be of arbitrary complexity.

Another approach is flux based estimator - here flux is being estimated using motor parameters and measured quantities, currents and voltage. When flux value is known, then using magnet characteristic as function of temperature it is possible to determine rotor temperature. If also motor emf voltage is estimated also this is related to magnet temperature.

Yet another approach is to use a "Time constant model", here the stator temperature is measured and then, using a table based information obtained during calibration about final rotor temperature and possible time constant for heating and cooling, the rotor temperature can be estimated.

There may be other implementations of thermal models for rotor temperature estimation - i.e. neural networks etc.

More innovative approaches require injection of some sort of excitation signal or test voltage or current. Observing as feedback signals are modified due to machine second order properties like saturation depending on temperature it is possible to derive rotor temperature online.

Most thermal models, require an initial value of the temperature, the initial rotor temperature, to start with, unless the algorithm identifies temperature instantaneously. Especially initial rotor temperature is essential for correct torque computation at the beginning of driving. In prior art, this initial value of temperature is obtained in several ways:

a) some other measured value i.e. stator temperature or ambient temperature, if available;
b) last known temperature from model (saved before switching off the unit); or
c) calculated value from last know temperature as of point b) considering also cooling time constant and time interval during which the unit was switched off.

If the rotor temperature estimator is used in its various forms, its output must be properly initialized at the beginning of the operating phase. There are several drawbacks associated with initialization methods in prior art. If some other measured temperature is used, it is often a case, that there is a temperature difference between temperature of interest in rotor and other temperature. Especially when cooling effects are different between two spots. Only after very long time between last and new driving cycle elapsed, the temperatures may have equalized, and error will be small.

In some low-cost applications however, the stator temperature measurement might be not available because it requires sensor and processing circuits, or its safety level is not sufficient. Last known temperature method is only suitable when time between switch off and next driving cycle is very short. The cooling which could be still operated may reduce temperature and thus temperature difference is created.

The initialization, which takes into account the last known temperature and time while the electrical machine was switched off appears as best, but to measure the time comes at a cost. There must be present some real time clock capability on device operating even when the power is off, or device is in sleep mode.

If the model is initialized with the temperature value having big error, then model must be capable to eliminate this error and converge to real rotor temperature over the time. During this convergence time, the torque calculation precision is impacted.

It is an object of the invention to provide means allowing a quick and fairly accurate estimation of the initial rotor temperature.

This object is achieved by a method and a system for estimating an initial rotor temperature having the features according to the respective independent claims. Advantageous implementations of the invention are the subject matter of the dependent claims, of the description and of the figures.

According to several aspects of the inventive method for estimating an initial rotor temperature of a rotor of an electric machine before an operating phase of this electric machine, in which the electric machine is supplied with current via current paths by means of a power inverter and wherein by use of a module for carrying out a so-called d/q-transformation

(i) a module for outputting switching signals for the electrical machine can be controlled by means of two voltages, each related to one of two rotor referred coordinates d and q applied to one of two corresponding voltage inputs, and
(ii) the current flowing along the current paths can be read out at two corresponding current outputs as currents, each referred to one of the two rotor referred coordinates d and q, it is intended before or at the beginning of the operating phase a voltage pulse signal is given to at least one of the voltage inputs and the initial rotor temperature is determined from a current response at one or more of the current outputs to this defined voltage pulse signal.

The electrical machine preferably is an Interior Permanent Magnet Synchronous Machine (IPMSM). The basis for an explanation of the above introduced approach are the following equations of IPMSM based on flux components in direct and quadrature axis:

$$ud = Rs \cdot id - \omega \cdot \varphi q + \frac{d\varphi d}{dt} \qquad \varphi q = Lq \cdot iq$$
$$uq = Rs \cdot iq + \omega \cdot \varphi d + \frac{d\varphi q}{dt} \qquad \varphi d = Ld \cdot id + \varphi_{PM} \qquad [1]$$

Where $U_{dq}$ is the machine terminal voltage, $i_{dq}$ is the machine current, ($\varphi_{dq}$ is stator flux, ($\varphi_{PM}$ is permanent magnet flux, $L_{dq}$ is motor inductance in direct and quadrature axis respectively. If the fluxes are substituted into d voltage equation, then this results in:

$$ud = Rs \cdot Id - \omega \cdot Lq \cdot Iq + \frac{d}{dt}(Ld \cdot Id + \varphi_{PM}) \qquad [2]$$

If now cross coupling is considered, saturation and the fact that motor permanent magnet flux depends on temperature, this results in:

$$ud = Rs \cdot Id - \omega \cdot Lq(Id, Iq) \cdot Iq + \frac{d}{dt}\big(Ld(Id, Iq) \cdot Id + \varphi_{PM}(Id, Iq, Temp)\big) \qquad [3]$$

Note, that inductances and flux now depend on currents. Voltage in q equation is considered zero and this contributes to low IQ, (there still will be some IQ due to cross coupling effect). If we consider zero speed, as it is at beginning of driving cycle, equation [3] simplifies to:

$$ud = Rs \cdot Id + \frac{d}{dt}\big(Ld(Id, Iq) \cdot Id + \varphi_{PM}(Id, Iq, Temp)\big) \qquad [4]$$

Clearly the temperature effect is hidden in the derivative term on the right side. $L_d$ inductance term is temperature invariant, but permanent magnet flux does depend on temperature and thus temperature will affect current derivative value.

For simple understanding, the entire term in derivative is rough some equivalent inductance multiplied by a current increase L*ΔI and applied voltage Ud is constant. If the temperature is low, magnet remanence is higher, magnet flux will saturate stator core stronger, equivalent inductance will be lower, thus ΔI current term must be higher. Vice versa, if the magnet temperature is higher, its flux will be lower, saturation degree is smaller, equivalent inductance is higher and thus ΔI term must be smaller to match constant voltage term on the left side.

In IMPSM machines for EV applications such temperature dependent saturation effect is very strong. Due to the continuous strive of designs for small motor size, the magnetic circuit is operated with highest possible flux density.

According to a preferred embodiment of the invention the voltage pulse signal is applied to one voltage input while the voltage at the other voltage input is simultaneously zero. The one voltage input is the d input, the other voltage input is the q input (with the voltage VQ at the other voltage input being VQ = 0). The one current output is the corresponding d output and the other current output is the q output.

Preferably the voltage pulse signal has pulse components of both polarities in equal parts, but only positive part is needed for temperature estimation.

According to another preferred embodiment of the invention the maximum current or current gradient (difference between maximum current and previous sample) of the current response is considered at the determination of the initial rotor temperature.

According to yet another preferred embodiment of the invention the rotor position is determined by a sensor and taken into account in estimating the initial rotor temperature.

Preferably the initial rotor temperature is estimated via the rotor position, the current response and corresponding table values associating the rotor position and the current response with the initial rotor temperature.

Preferably the module for outputting switching signals is a PWM module.

According to another preferred embodiment of the invention the duration of the voltage pulse signal consists of several cycles or only one cycle of switching signal, in particular PWM cycle.

According to yet another preferred embodiment of the invention the power inverter is realized as a computer-based power inverter, in which at least the module for carrying out a so-called d/q transformation is designed as a software module. Finally, it is advantageous that the voltage pulse signal is a rectangular signal, a saw tooth signal or a mixed form of rectangular and saw tooth signal.

According to several aspects of the system for estimating an initial rotor temperature of a rotor of an electric machine before an operating phase of this electric machine, the system comprises a power inverter for supplying current to the electric machine via current paths, wherein this power inverter comprises a module for carrying out a so-called d/q transformation, via which module, (i) a module for outputting switching signals for the electrical machine can be controlled by means of two voltages, each related to one of two rotor referred coordinates d and q applied to one of two corresponding voltage inputs, and (ii) the current flowing along the current paths can be read out at corresponding current outputs as currents, each referred to one of the two rotor referred coordinates d and q. The system further comprises a temperature estimating module, which is arranged to give a voltage pulse signal to at least one of the voltage inputs before or at the beginning of the operating phase of the electrical machine and to determine the initial rotor temperature from a current response at one or more of the current outputs to this defined voltage pulse signal.

According to another preferred embodiment of the system according to the invention, the system is arranged to carry out the aforementioned method.

Further features of the invention are apparent from the claims, the figure and the description of the figure. All of the features and feature combinations mentioned above in the description as well as the features and feature combinations mentioned below in the description of the figure and/or shown in the figure alone are usable not only in the respectively specified combination, but also in other combinations or alone.

Now, the invention is explained in more detail based on a preferred embodiment as well as with reference to the attached drawings.

In the drawings:

Fig. 1 shows a control block diagram with an electric machine and a system for estimating an initial rotor temperature of a rotor of said electric machine,

Fig. 2 shows the shape of a voltage pulse signal,

Fig. 3 shows the dependency of an ID current peak on the magnet temperature of the rotor,

Fig. 4 shows sector like pieces of a rotor and a stator of the electric machine in a position where ID current is minimal,

Fig. 5 shows sector like pieces of a rotor and a stator of the electric machine in a position where ID current is maximal,

Fig. 6 shows the ID current peak dependency on the rotor position and different rotor temperatures,

Fig. 7 shows the ID current peak dependency on the rotor temperature and rotor position related max-min deviation, and

Fig. 8 shows a block diagram of the approach to derive the initial rotor temperature from measured quantities.

Fig. 9 shows the rotor temperature as function of position and current peak (interpolation surface example), and

Fig. 10 shows a block diagram of the initialization of a thermal model for the rotor temperature.

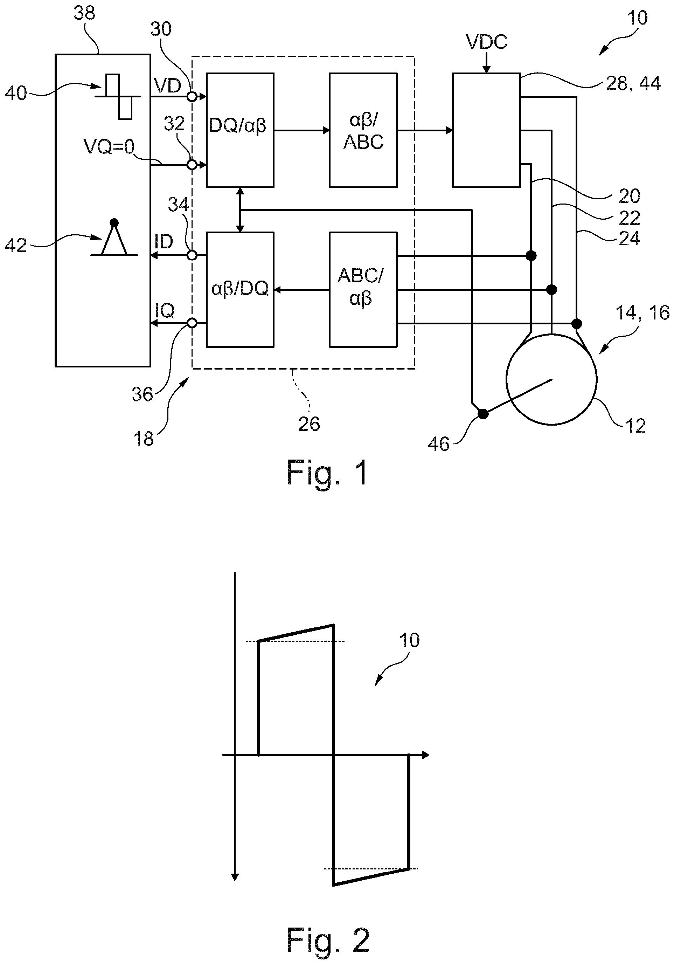

Fig. 1 shows a system 10 for estimating an initial rotor temperature of a rotor 12 of an electric machine 14 before an operating phase of said machine 14. The electric machine 14 can be installed in a power train of a vehicle and might be designed as a permanent magnet synchronous machine 16. The system 10 comprises a power inverter 18 for supplying current to the electric machine via current paths 20, 22, 24, wherein this power inverter 12 comprises a module 26 for carrying out a so-called d/q transformation, via which module 26 a module 28 for outputting switching signals for the electrical machine can be controlled by means of two voltages VD, VQ, each related to one of two rotor referred coordinates d and q applied to one of two corresponding voltage inputs 30, 32. On the other hand the corresponding current components ID, IQ of the current flowing along the current paths 20, 22, 24 can be read out at corresponding current outputs 34, 36, each referred to one of the two rotor referred coordinates d and q.

For estimating the initial rotor temperature $T_i$ of the rotor, a temperature estimating module 38 of the system 10, which is arranged to give a voltage pulse signal 40 to one of the voltage inputs 24 before or at the beginning of the operating phase of the electrical machine and to determine the initial rotor temperature from a current response 42 at one or more of the current outputs 28 to this defined voltage pulse signal.

In other words: A well-known standard electronic power inverter 18 with appropriate software can be used to implement the proposed method for temperature identification of the initial rotor temperature. On Fig.1, relevant control software blocks are described as the d/q-transformation module 26 and the switching signal module 28, which preferably is a PWM module 44 (PWM: pulse width modulator). The PWM module 44 converts voltage control references to switching signal for the power device electrical machine 14 and will guarantee that reference voltage is realized on the output of the power inverter 18 according to available DC voltage. On bottom path of the d/q transformation module 26, three or two measured currents are handled by transformation blocks performing Clark-Park conversion to DQ frame. The angular position of the rotor 12 is determined by a sensor 46.

On top path of the d/q transformation module 26, inverse Park-Clark transformation blocks are processing reference voltage to the switching signal module 28 /PWM module 44. Rotor position is also measured by a suitable feedback device i.e. resolver, encoder. Position is needed for Park conversion and, as it will be shown later, it is essential for correct implementation of novel idea of this patent.

A voltage pulse signal 40 is applied to VD voltage, while VQ is zero, to excite current derivative as of equation [4]. Typical duration of voltage pulse signal is several hundreds of microseconds i.e. from $300\mu s$ to $600\mu s$ and covers several control cycles with active PWM. If control cycle is, say $100\mu s$, it lasts from 3 to 6 cycles. Amplitude of pulse depends on available DC voltage, in general it is preferred to use as much voltage as possible from DC supply. Shape of the pulse signal 40 may be rectangular, or as shown in Fig.2, it may continuously rise according to current to cover drop on stator resistance. Stator resistance is usually very small in this type of traction motors and could be also neglected. The switching signal module 28 / PWM module 44 must ensure that commanded voltage is realized on output with most accuracy even when the supply voltage would be dropping because of increasing current and weak supply. Voltage is a sequence of positive and negative pulse. Applying pulse with both polarities has a consequence that average torque produced by the motor (considering also cross coupling with Q axis) is zero over the entire pulse duration, in other words, the rotor will not change its position.

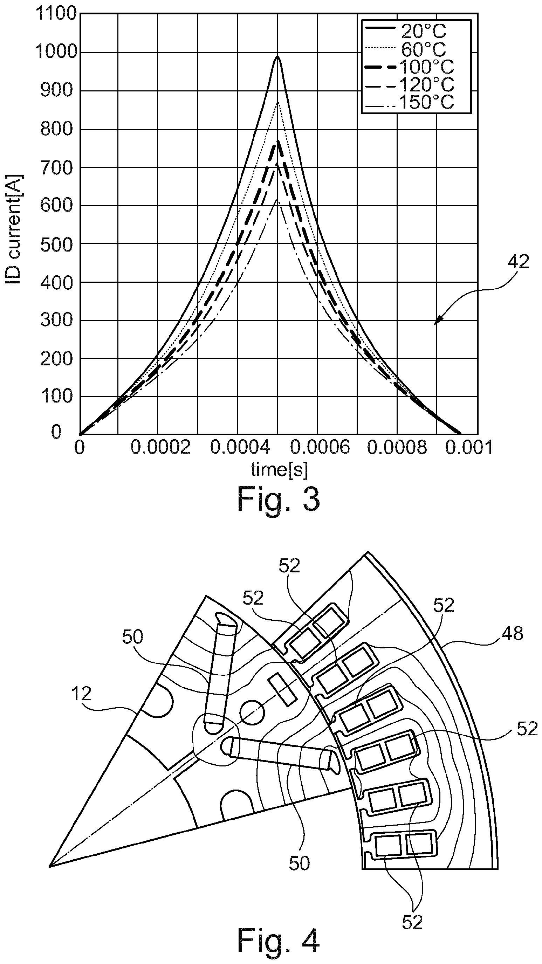

When the voltage pulse signal 40 is applied as described above, the current response 42 is produced in D axis which carries the information about the temperature. An example of current is shown in Fig.3 for voltage pulse duration $500\mu s$ positive and $500\mu s$ negative. It is possible to observe that current peak (at the instant of voltage inversion) depends on temperature. In addition, also current gradient, computed as a difference of new and previous current measurement sample depends on temperature. Example temperature values investigated from 20°C to 150°C are shown.

Current level reached during test pulse is compatible with EV types of IPMSMs and inverters. Temperature dependency effect is strong as mentioned previously and can be several hundred amps. In general, the voltage pulse signal 40 should be kept as short as possible to limit current peak response 42 to such levels where temperature effect caused current difference is well detected by processing hardware of electronic control unit.

The current level however will not be the same when rotor position of the rotor 12 changes. In Fig.4 is shown cross section of example IMPSM for one pole. The stator 48 and rotor 12 laminations are visible, with magnets 50 buried in rotor 12 and winding in stator slots 52. On such arrangement FEM flux analysis was carried out. The rotor flux penetration to stator 48 is not constant on stator circumference, but it depends on relative rotor-stator position and is influenced by stator slots 52. That is, flux density in stator 48 and therefore saturation is position dependent. That is true for any interior permanent magnet motor. On Fig.4 is shown rotor 12 in a position which corresponds to minimal current peak response. Here flux lines encircle two stator slots 52 causing certain degree of saturation.

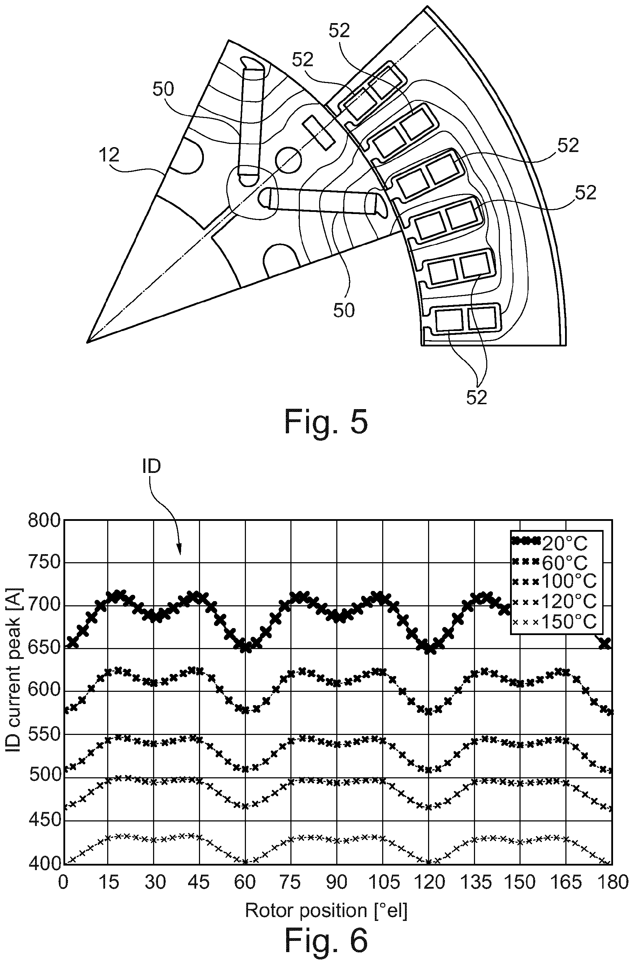

On Fig.5 is again shown rotor 12 in different position where current response 42 is maximal, flux lines encircle just one stator slot 52 suggesting that saturation is higher as in previous case. If current response 42 (peak and gradient) depends on position, it influences heavily temperature detection accuracy.

Fig.6 shows ID current peaks detected for rotor position change corresponding to one pole. Clearly the slotting effect is manifested, there are 6 peaks visible in current response corresponding to 6 stator slots 52 per rotor pole. The shape of waveform and number of peaks is only an example for this particular rotor construction and this particular number of stator slots 52, different shapes are possible for different motors/machines 14.

The main point here is position dependency. Fig. 6 shows that shape repeats regularly for this example, but in reality, there can be irregularities in current response 42 if considered entire stator circumference and all motor poles. Magnets may not be magnetized all to the same level. Stator 48 and rotor 12 are manufactured with some mechanical tolerances. Ideally, rotor absolute position would have to be known, to perfectly compensate for such tolerances. If absolute position over one mechanical revolution is not available, then rotor electrical position (needed for control of motor) can also be used having some averaging effect. That depends on type of feedback device employed.

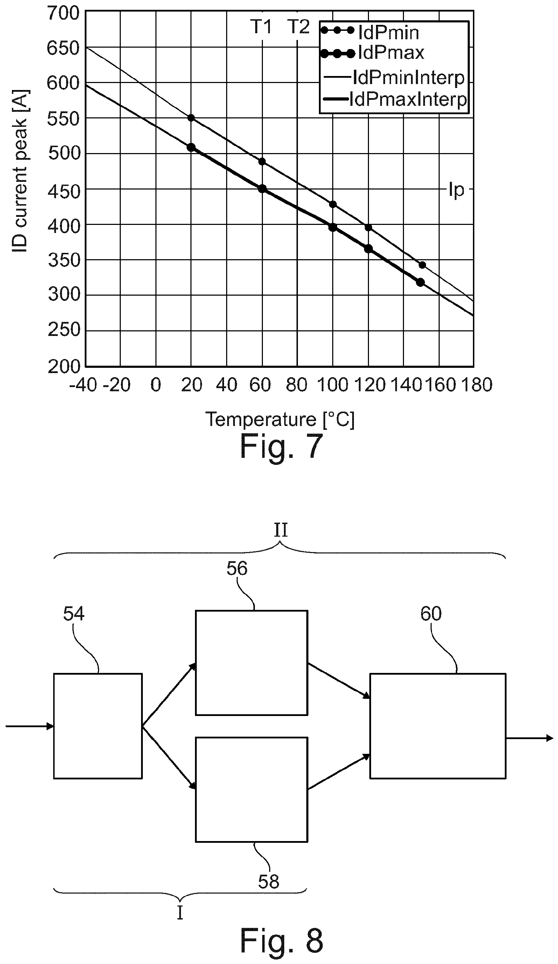

Fig.7 also shows the temperature dependency of current response 42. Here maximal and minimal current response peak of Fig.6 is plotted over the temperature variation. Clearly, if say 450A current peak is detected, it may correspond to either i.e. 60°C or 84°C. Such big, 25°C error would be committed if position is not considered.

At switching on of electronic control unit, the rotor 12 may be in any position with respect to stator 48. If position information is considered, the temperature detection accuracy is greatly improved.

The identified rotor temperature by short current response measurement can be used to initialize a rotor temperature model.

The method proposed in this application uses information about rotor position of the rotor 12 to derive position depended current response 42 to identify rotor magnet temperature of IMPSM by short instantaneous measurement. Duration can be minimal, just one pulse of approximately 1ms. No need for previous rotor temperature value or information about switch off time or cooling characteristics. The rotor temperature is found with accuracy of ±5K as results from practical test measurements, which guarantees excellent torque estimation right from the start. As the rotor temperature identification is independent of other temperature measurement, i.e. stator temperature, this information can be used for sensor plausibilization purpose in "safety" software. Involved quantities, current, voltage and position are already acquired in electronic control unit of EV inverter with high safety integrity level.

The method can be also used for instantaneous correction of temperature from thermal model, if measurement and initialization is triggered in situations when speed is zero i.e. stopping at traffic light in case of EV application. The method can be also used for diagnostic purpose, to detect level of demagnetization of rotor magnets if a reference temperature is known by comparing the current response 42 with one referred to some reference temperature.

Corresponding embodiments of the approach can be divided into two procedures:

- identification/measurement of position related current response relation with temperature for particular IPMSM during development, in other words, the calibration
- execution of short test measurement according to this method at ECU switch on, or in other particular instants when such measurement is permitted, using the calibration information to convert the current response value to temperature and thermal model initialization or plausibilization.

In a first implementation, software for machine control in the ECU as described by block diagram of Fig.1 is needed, capable of producing a test pulse signal 40 as of Fig.2. In addition, software must measure ID current peak and/or current gradient (difference between current peak and previous current sample).

Electrical machine 14 under test, without cooling (if present) is put into thermal chamber with constant temperature. Electrical machine 14 is heated by thermal chamber until rotor 12 reaches desired temperature. If the rotor temperature is not available simply wait sufficiently long time to equalize the temperature in all machine parts. Possibly start with highest value of temperature in the chamber, such as supported by machine parts design i.e. 150°C.

The rotor position 0 is established. Then voltage test pulse 40 is applied by control software. The pulse signal 40 may be just one, but better implementation is several pulse signals, i.e. ten. Current response 42 is recorded for each pulse signal 40 and then is averaged over number of pulse signals applied. Block diagram of procedure is depicted on Fig.8, the left part is active, used at calibration.

A new rotor position is established. Position step depends on particular machine design, number of stator slots per pole. Only for example purpose, a suitable value may be 3°el. Again, the test sequence is applied. The procedure is repeated for one motor revolution 360°mech., or minimally for one pole span 180°el.

With this procedure, a current response is measured for different positions at constant temperature and data as one waveform in Fig.6 are obtained.

The temperature in thermal chamber is decreased and new rotor temperature is established after sufficiently long time. The position change procedure is repeated over from 0 position. Measurements at several temperatures are needed, 4 to 6 values. A full data set is obtained, the current response in function of position and temperatures, similar to Fig.6.

Fig. 8 shows a block diagram of the approach to derive the initial rotor temperature from measured quantities. In block 54 voltage pulse signal(s) 40 is/are produced; in block 56 a current response (a current peak response IP) is measured; in block 58 the angular position of the rotor 12 is measured; and in block 60 the rotor temperature is determines by use of a table + interpolation (T = f(IP, position). Blocks 54 - 58 are calibration steps I and blocks 54 - 60 are initialization steps II.

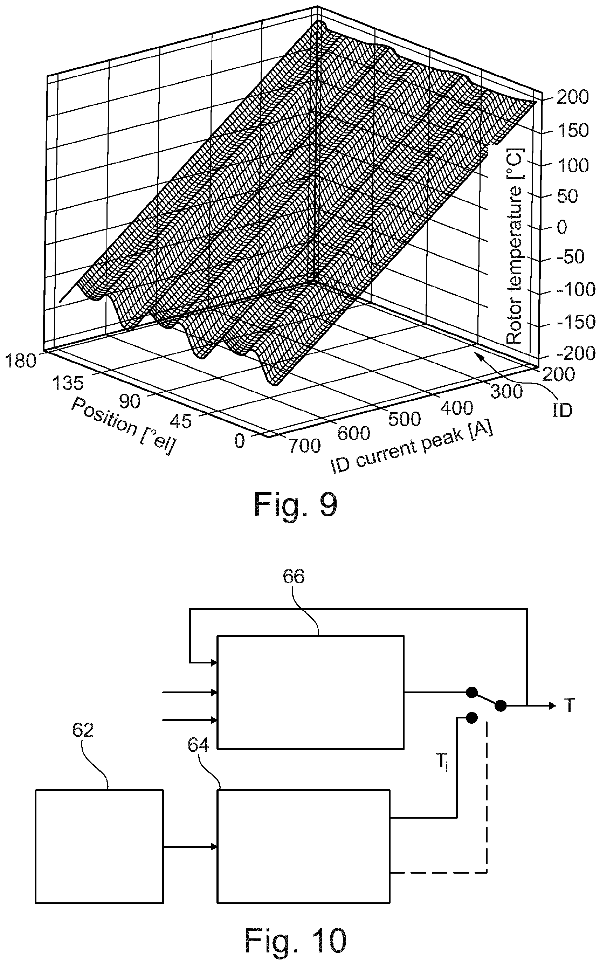

This data set can be inverted by simple mathematical operation and "surface" as of Fig.9 is obtained. The missing points are calculated by interpolation. The eventual error caused by interpolation is small because relation of current to temperature is almost linear as shown in Fig.7. The shape of this two-dimensional function depends on particular rotor construction as is provided here for example Fig.4,5. Either ID current peak or ID current derivative can be used. Function can be stored in the form of table and used in next step. Fig. 9 shows the rotor temperature as function of position and current peak (interpolation surface example).

A second implementation is "runtime" execution and initialization procedure. At the ECU start or whenever software determines there is suitable condition i.e. zero speed, a test pulse is applied to detect current response (peak or gradient). A test pulse is applied in rotor D axis but with respect to stator this can be any position. Just one pulse of approximately 1ms is sufficient, but also two or more can be used and then average value is used for further processing. The actual or averaged position is also recorded. This process is described in Fig. 8 on left side as a first step. In a second step, on the right side, current value and position are subsequently used in table as of Fig. 9 and by interpolation rotor temperature is obtained. The temperature value is very accurate depending only on current measurement accuracy for a sample machine 14.

The temperature value is further used to initialize rotor temperature model as shown in Fig.10 or for checking other sensor measured value range, so called plausibilization in safety software. Fig. 10 shows a block diagram of the initialization of a thermal model for the rotor temperature T. Block 62 comprises condition monitoring and triggering; block 64 comprises initial temperature estimation or identification. The resulting initial temperature $T_i$ is transferred to a closed loop rotor temperature estimating system comprising a rotor thermal model (Block 66), which estimates the rotor temperature T during operation.

## Claims

1. Method for estimating an initial rotor temperature of a rotor (12) of an electric machine (14), in particular of a permanent magnet synchronous machine (16), before an operating phase of this electric machine (14), wherein the electric machine (14) is supplied with current via current paths (20, 22, 24) by means of a power inverter (18) and wherein via a module (26) for carrying out a so-called d/q-transformation

   - a module (28) for outputting switching signals for the electrical machine (14) can be controlled by means of two voltages VD, VQ, each related to one of two rotor referred coordinates d and q applied to one of two corresponding voltage inputs (30, 32), and
   - the current flowing along the current paths (20, 22, 24) can be read out at two corresponding current outputs (34, 36) as currents ID, IQ, each referred to one of the two rotor referred coordinates d and q,

   **characterized in that** before or at the beginning of the operating phase a voltage pulse signal (40) is given to at least one of the voltage inputs (30) and the initial rotor temperature is determined from a current response to this defined voltage pulse signal (40) at one or more of the current outputs (34).

2. Method according to claim 1, **characterized in that** the voltage pulse signal (40) is applied to one voltage input (30) while the voltage VQ at the other voltage input (32) is simultaneously zero.

3. Method according to claim 1 or 2, **characterized in that** the voltage pulse signal (40) comprises pulse components of both polarities in equal parts or only a positive pulse component.

4. Method according to any one of claims 1 to 3, **characterized in that** a maximum current of the current response is considered at the determination of the initial rotor temperature.

5. Method according to any of claims 1 to 4, **characterized in that** the rotor position is determined by a sensor (46) and taken into account in estimating the initial rotor temperature.

6. Method according to claim 5, **characterized in that** the initial rotor temperature is estimated via the rotor position, the current response and corresponding table values associating the rotor position and the current response with the initial rotor temperature.

7. Method according to any one of claims 1 to 6, **characterized in that** the module for outputting switching signals is a PWM module (44).

8. Method according to any one of claims 1 to 7, **characterized in that** the duration of the voltage pulse signal (40) is just one switching cycle or longer than a switching cycle of the switching signal output module (28), in particular the PWM cycle.

9. Method according to one of the claims 1 to 8, **characterized in that** the power inverter (18) is realized as a computer-based power inverter, in which at least the module for carrying out a so-called d/q transformation (26) is designed as a software module.

10. Method according to one of claims 1 to 9, **characterized in that** the voltage pulse signal (40) is a rectangular signal, a saw tooth signal or a mixed form of rectangular and saw tooth signal.

11. System (10) for estimating an initial rotor temperature of a rotor (12) of an electric machine (14), in particular a permanent magnet synchronous machine (16), before an operating phase of this electric machine (14), wherein the system (10) comprises a power inverter (18) for supplying current to the electric machine (14) via current paths (20, 22, 24), wherein this power inverter (18) comprises a module (26) for carrying out a so-called d/q transformation, via which module (26),

   - a module (28) for outputting switching signals for the electrical machine (14) can be controlled by means of two voltages VD, VQ, each related to one of two rotor referred coordinates d and q applied to one of two corresponding voltage inputs (30, 32), and
   - the current flowing along the current paths (20, 22, 24) can be read out at corresponding current outputs (34, 36) as currents ID, IQ, each referred to one of the two rotor referred coordinates d and q,

   **characterized by** a temperature estimating module (38), which is arranged to give a voltage pulse signal (40) to at least one of the voltage inputs (30) before or at the beginning of the operating phase of the electrical machine (14) and to determine the initial rotor temperature from a current response (42) to this defined voltage pulse signal (40) at one or more of the current outputs (34).

12. System according to claim 11, **characterized in that** said system (10) is arranged to carry out the method according to one of claims 1 to 9.

Fig. 1

Fig. 2

Fig. 3

Fig. 4

# Fig. 5

Fig. 6

Fig. 7

Fig. 8

Fig. 9

Fig. 10

**EP 3 806 323 A1**

Europäisches
Patentamt
European
Patent Office
Office européen
des brevets

**EUROPEAN SEARCH REPORT**

Application Number

EP 19 20 2515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REIGOSA DAVID DIAZ ET AL: "Permanent-Magnet Temperature Estimation in PMSMs Using Pulsating High-Frequency Current Injection", IEEE TRANSACTIONS ON INDUSTRY APPLICATIONS, IEEE SERVICE CENTER, PISCATAWAY, NJ, US, vol. 51, no. 4, 1 July 2015 (2015-07-01), pages 3159-3168, XP011663199, ISSN: 0093-9994, DOI: 10.1109/TIA.2015.2404922 [retrieved on 2015-07-15] | 1-8, 10-12 | INV. H02P29/66 |
| Y | * abstract * * sections IV * * section V * * figures 1, 2 * | 9 | |
| X | REIGOSA DAVID ET AL: "Comparative Analysis of BEMF and Pulsating High-Frequency Current Injection Methods for PM Temperature Estimation in PMSMs", IEEE TRANSACTIONS ON POWER ELECTRONICS, INSTITUTE OF ELECTRICAL AND ELECTRONICS ENGINEERS, USA, vol. 32, no. 5, 1 May 2017 (2017-05-01), pages 3691-3699, XP011640391, ISSN: 0885-8993, DOI: 10.1109/TPEL.2016.2592478 [retrieved on 2017-02-02] | 1-8, 10-12 | TECHNICAL FIELDS SEARCHED (IPC) H02P |
| Y | * abstract * * section III * * figure 2 * | 9 | |

-/--

The present search report has been drawn up for all claims

| Place of search | Date of completion of the search | Examiner |
|---|---|---|
| Munich | 11 March 2020 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 20 2515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GANCHEV M ET AL: "Sensitivity and robustness aspects of sensorless rotor temperature estimation technique for Permanent Magnet Synchronous Motor", POWER ELECTRONICS AND MOTION CONTROL CONFERENCE (EPE/PEMC), 2012 15TH INTERNATIONAL, IEEE, 4 September 2012 (2012-09-04), pages LS3a-1.2, XP032312028, DOI: 10.1109/EPEPEMC.2012.6397426 ISBN: 978-1-4673-1970-6 | 1-8, 10-12 | |
| Y | * abstract * * sections I, III, IV * * figures 1, 2, 4 * | 9 | |
| X | LAZCANO U ET AL: "DC voltage signal injection for temperature monitoring in very small resistance induction machines", ELECTRICAL SYSTEMS FOR AIRCRAFT, RAILWAY AND SHIP PROPULSION (ESARS), 2012, IEEE, 16 October 2012 (2012-10-16), pages 1-6, XP032282798, DOI: 10.1109/ESARS.2012.6387467 ISBN: 978-1-4673-1370-4 * abstract * * sections I, III * * figure 1 * | 1,11 | |
| X | US 2015/381090 A1 (HENDERSON MICHAEL I [GB] ET AL) 31 December 2015 (2015-12-31) * paragraphs [0045] - [0047] * * figure 3 * | 1,11 | |
| Y | US 2013/234446 A1 (KISHIBATA KAZUYOSHI [JP] ET AL) 12 September 2013 (2013-09-12) * paragraphs [0064], [0069], [0078], [0117] * * figures 2, 3 * | 9 | |

TECHNICAL FIELDS
SEARCHED      (IPC)

The present search report has been drawn up for all claims

| Place of search | Date of completion of the search | Examiner |
|---|---|---|
| Munich | 11 March 2020 | Roider, Anton |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 20 2515

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2020

| Patent document cited in search report | | Publication date | Patent family member(s) | | Publication date |
|---|---|---|---|---|---|
| US 2015381090 | A1 | 31-12-2015 | US 2015381090 A1 | | 31-12-2015 |
| | | | US 2015381091 A1 | | 31-12-2015 |
| US 2013234446 | A1 | 12-09-2013 | CN 103210577 A | | 17-07-2013 |
| | | | EP 2639957 A1 | | 18-09-2013 |
| | | | JP 5605434 B2 | | 15-10-2014 |
| | | | JP WO2012063287 A1 | | 12-05-2014 |
| | | | US 2013234446 A1 | | 12-09-2013 |
| | | | WO 2012063287 A1 | | 18-05-2012 |

EPO FORM P0459

For more details about this annex : see Official Journal of the European Patent Office, No. 12/82